# EUROPÄISCHE PATENTSCHRIFT

(11) **EP 2 995 419 B1**
(45) Veröffentlichungstag und Bekanntmachung des Hinweises auf die Patenterteilung: **17.07.2019**
(21) Anmeldenummer: 15183545.1
(22) Anmeldetag: 02.09.2015
(51) Int. Cl.: B23Q 1/01, B23Q 39/02

(54) **WERKZEUGMASCHINE**
MACHINE TOOL
MACHINE-OUTIL

(30) Priorität: 12.09.2014 DE 102014113204
(43) Veröffentlichungstag der Anmeldung: 16.03.2016
(73) Patentinhaber: Index-Werke GmbH & Co. KG Hahn & Tessky, 73730 Esslingen (DE)
(72) Erfinder: Hofmann, Manfred, 70565 Stuttgart (DE); Schleich, Günther, 73269 Hochdorf (DE)
(74) Vertreter: Hoeger, Stellrecht & Partner Patentanwälte mbB

(56) Entgegenhaltungen:
- EP-B1- 1 193 027
- DE-A1- 19 904 859
- DE-A1- 19 911 156
- DE-A1-102012 107 295

## Beschreibung

Die Erfindung betrifft eine Werkzeugmaschine mit einem Maschinengestell, welches ein Maschinenbett umfasst, das einen sich in einer Längsrichtung erstreckenden Maschinenbettkörper aufweist, der eine einer Aufstellfläche der Werkzeugmaschine zugewandte Unterseite, eine der Unterseite gegenüberliegend angeordnete und der Unterseite abgewandte Oberseite sowie eine sich zwischen der Unterseite und der Oberseite quer zur Unterseite erstreckende Frontseite aufweist, mit zwei an dem Maschinenbett angeordneten Werkstückspindeleinheiten, die von Spindelträgern gehalten sind und von denen jede eine Werkstückaufnahme aufweist, die um eine jeweilige Spindelachse drehbar ist, wobei die Werkstückspindeleinheiten derart am Maschinenbett angeordnet sind, dass die Spindelachsen koaxial zueinander ausgerichtet sind, so dass ein Werkstück zur Bearbeitung auf der Vorderseite und der Rückseite in einer Werkstückübergabeposition übergebbar ist, wobei die die Werkstückspindeleinheiten haltenden Spindelträger an der Oberseite des Maschinenbettkörpers gehalten sind und mit mindestens einer am Maschinenbett angeordneten und von einem unteren Schlittensystem getragenen unteren Werkzeugträgereinheit, wobei das mindestens eine untere Schlittensystem an der Frontseite des Maschinenbettkörpers angeordnet und an in Z-Richtung verlaufenden Linearführungen, an dem Maschinenbettkörper geführt ist, wobei die Spindelachsen in der Werkstückübergabeposition in einer X/Z-Ebene liegen, die im Abstand von der Frontseite und im Abstand vor der Frontseite des Maschinenbettkörpers verläuft.

Derartige Werkzeugmaschinen sind beispielsweise aus der DE 199 11 156 A1 bekannt.

Ausgehend von diesen bekannten Werkzeugmaschinen liegt der Erfindung die Aufgabe zugrunde, eine Werkzeugmaschine derart zu verbessern, dass mit dieser eine optimale Bewegbarkeit der Werkstückspindeleinheiten sowie der unteren Werkzeugträgereinheiten relativ zueinander möglich ist.

Diese Aufgabe wird bei einer Werkzeugmaschine der eingangs beschriebene Art erfindungsgemäß dadurch gelöst, dass einer der Spindelträger stationär auf der Oberseite des Maschinenbettkörpers fixiert ist, dass an dem Maschinenbett mindestens zwei jeweils von einem unteren Schlittensystem getragene untere Werkzeugträgereinheiten vorgesehen sind, dass die mindestens zwei unteren Schlittensysteme mit der jeweiligen unteren Werkzeugträgereinheit in Z-Richtung so weit verfahrbar ist, dass diese eine Parkposition außerhalb eines Bearbeitungsbereichs erreichen, welcher sich zwischen senkrecht zu den jeweiligen Spindelachsen verlaufenden und eine Stirnseite der Werkstückaufnahmen berührenden Begrenzungsebenen in der Z-Richtung erstreckt, dass die mindestens zwei unteren Schlittensysteme derart am Maschinenbettkörper in Z-Richtung bewegbar geführt sind, dass bei jeder möglichen Ausdehnung des Bearbeitungsbereichs in Z-Richtung die Werkzeuge der jeweiligen unteren Werkzeugträgereinheit innerhalb des gesamten Bearbeitungsbereichs einsetzbar sind.

Der Vorteil der erfindungsgemäßen Lösung ist somit darin zu sehen, dass bei dieser die Möglichkeit besteht, die mindestens eine untere Werkzeugträgereinheit weitgehend unabhängig von den Werkstückspindeleinheiten relativ zueinander und relativ zu den Werkstückspindeleinheiten zu bewegen und zu positionieren.

Um eine hohe Flexibilität bei der Bearbeitung von Werkstücken, die in einer der Werkstückspindeleinheiten oder in beiden Werkstückspindeleinheiten aufgenommen sind, zu erhalten, ist vorgesehen, dass die mindestens zwei unteren Schlittensysteme mit der jeweiligen Werkzeugträgereinheit in Z-Richtung soweit verfahrbar ist, dass diese eine Parkposition außerhalb eines Bearbeitungsbereichs erreichen, welcher sich zwischen senkrecht zu den jeweiligen Spindelachsen verlaufenden und eine Stirnseite der jeweiligen Werkstückaufnahme berührenden Begrenzungsebenen in der Z-Richtung erstreckt.

Damit lässt sich mindestens eines der unteren Schlittensysteme dadurch, dass es in der Parkposition steht, aus dem Bearbeitungsbereich heraus bewegen, so dass eine Zusatzeinheit oder das andere untere Schlittensystem, beispielsweise zur Bearbeitung von Wellenteilen, in dem gesamten Bearbeitungsbereich kollisionsfrei zum in der Parkposition stehenden Schlittensystem einsetzbar ist.

Die Bearbeitung mit der erfindungsgemäßen Werkzeugmaschine lässt sich jedoch besonders vorteilhaft dadurch realisieren, dass die mindestens zwei unteren Schlittensysteme derart am Maschinenbettkörper in Z-Richtung bewegbar geführt sind, dass in jeder möglichen, das heißt sowohl bei der minimalen als auch bei der maximalen Ausdehnung des Bearbeitungsbereichs in Z-Richtung, die Werkzeuge der jeweiligen unteren Werkzeugträgereinheit innerhalb des gesamten Bearbeitungsbereichs einsetzbar sind.

Das heißt, dass das jeweilige untere Schlittensystem der unteren Werkzeugträgereinheit in Z-Richtung eine derart große Bewegbarkeit aufweist, dass selbst bei maximaler Ausdehnung des Bearbeitungsbereichs jedes Werkzeug der Werkzeugträgereinheiten innerhalb des gesamten Bearbeitungsbereichs, das heißt von einer Begrenzungsebene bis zur anderen Begrenzungsebene, einsetzbar ist.

Dies hat insbesondere bei der Bearbeitung von langen Teilen, beispielsweise Wellenteilen, den Vorteil, dass damit mit einem Werkzeug das gesamte Teil innerhalb des gesamten Bearbeitungsbereichs bearbeitet werden kann.

Insbesondere ist bei der Anordnung des mindestens einen unteren Schlittensystems vorgesehen, dass dieses vor der Frontseite des Maschinenbettkörpers angeordnet ist.

Eine der in der Z-Richtung verlaufenden Linearführungen könnte beispielsweise auch an der Unterseite des Maschinenbettkörpers angeordnet sein.

Vorzugsweise sind jedoch die in Z-Richtung verlaufenden Linearführungen für das mindestens eine Schlittensystem an der Frontseite des Maschinenbettkörpers angeordnet.

Grundsätzlich könnten für jedes der unteren Schlittensysteme eigene Linearführungen vorgesehen sein.

Besonders vorteilhaft ist jedoch eine Lösung, bei welcher die unteren Schlittensysteme an denselben in der Z-Richtung verlaufenden Linearführungen geführt sind.

Besonders zweckmäßig ist es, wenn die Spindelachsen in der Werkstückübergabeposition in einer X/Z-Ebene verlaufen, die parallel zur Z-Richtung der Werkzeugmaschine und gegenüber einer Vertikalen um einen Winkel von 30° oder weniger geneigt verläuft.

Noch besser ist es, wenn die X/Z-Ebene gegenüber der Vertikalen um einen Winkel von 20° oder weniger verläuft, und besonders günstig ist es, wenn die X/Z-Ebene gegenüber der Vertikalen um einen Winkel von 10° oder weniger geneigt verläuft.

Um optimale Verhältnisse bei der Bearbeitung des Werkstücks und eine möglichst klein bauende Werkzeugmaschine zu erhalten, ist vorzugsweise vorgesehen, dass das untere Schlittensystem und insbesondere auch die mindestens eine untere Werkzeugträgereinheit unterhalb einer durch die Spindelachsen in der Werkstückübergabeposition hindurch verlaufenden horizontalen Ebene liegen.

Das heißt, dass das mindestens eine untere Schlittensystem und insbesondere auch die mindestens eine Werkzeugträgereinheit unterhalb der zu bearbeitenden Werkstücke liegt und somit zum Bearbeiten der Werkstücke von unten auf die Werkstücke zu bewegt wird.

Bei einer bevorzugten Lösung sind die zwei Spindelachsen der Werkstückspindeleinheiten stets parallel zueinander ausgerichtet.

Bei einer besonders einfachen Konzeption ist vorgesehen, dass die zwei Spindelachsen stets koaxial zueinander ausgerichtet sind.

Besonders günstig ist es, wenn das in der Parkposition stehende Schlittensystem und die jeweilige von diesem getragene Werkzeugträgereinheit in der Parkposition in einem Abstand von der nächstliegenden Begrenzungsebene des Bearbeitungsraums stehen, der insbesondere mindestens einem Abstand einer Werkzeugaufnahme von einer parallel zur Begrenzungsebene verlaufenden Systemgrenzebene entspricht, deren Lage durch eine maximale Ausdehnung des jeweils anderen der Schlittensysteme mit der jeweiligen von diesem getragenen Werkzeugträgereinheit, gegebenenfalls mit den Werkzeugen, in Richtung der Begrenzungsebene definiert ist.

Eine weitere vorteilhafte Festlegung der Parkposition sieht vor, dass die jeweilige untere Werkzeugträgereinheit in einer Parkposition positionierbar ist, die zwischen zwei durch die jeweilige Werkstückspindeleinheit definierten Spindelendebenen liegt, welche senkrecht zur der jeweiligen Spindelachse verlaufen und durch einander gegenüberliegende Enden der Werkstückspindeleinheiten in Z-Richtung festgelegt sind.

Eine weitere günstige Lösung sieht vor, dass das mindestens eine untere Schlittensystem und die von diesem getragene jeweilige untere Werkzeugträgereinheit mindestens in einem einer Hälfte einer Ausdehnung der jeweiligen Werkzeugträgereinheit in Z-Richtung entsprechenden Abstand von jeweiligen Begrenzungsebene und außerhalb des Bearbeitungsbereichs positionierbar ist.

Im Zusammenhang mit dem Bearbeitungsbereich wurden lediglich die Parkpositionen des mindestens einen oder der Schlittensysteme und der Werkzeugträgereinheiten definiert.

Um zwei untere Werkzeugträgereinheiten möglichst nahe beieinander zur Bearbeitung positionieren zu können, ist vorzugsweise vorgesehen, dass die Werkzeuge der jeweiligen unteren Werkzeugträgereinheiten über einander zugewandt angeordneten Randbereichen der jeweiligen unteren Schlittensysteme angeordnet sind.

Dies hat den Vorteil, dass die Ausdehnung der Schlittensysteme die Positionierung der unteren Werkzeugträgereinheiten in möglichst geringem Abstand voneinander nicht behindert.

Hinsichtlich der Ausbildung des mindestens einen unteren Schlittensystems wurden bislang keine näheren Angaben gemacht.

So sieht eine vorteilhafte Lösung vor, dass die jeweilige untere Werkzeugträgereinheit durch das jeweilige untere Schlittensystem relativ zum Maschinenbettkörper in Z-Richtung und in X-Richtung bewegbar ist.

Noch vorteilhafter ist es, wenn die jeweilige untere Werkzeugträgereinheit durch das jeweilige Schlittensystem zusätzlich in Y-Richtung bewegbar ist.

Ferner ist vorzugsweise vorgesehen, dass die jeweilige untere Werkzeugträgereinheit durch das jeweilige untere Schlittensystem derart in X- und/oder Y-Richtung positionierbar ist, dass diese in Z-Richtung an der Werkstückaufnahme der jeweiligen Werkstückspindeleinheit vorbeibewegbar ist.

Bei einer weiteren Lösung ist vorgesehen, dass die jeweilige untere Werkzeugträgereinheit durch das jeweilige untere Schlittensystem derart in X-Richtung und/oder Y-Richtung positionierbar ist, dass diese in Z-Richtung an der jeweiligen Werkstückspindeleinheit vorbeibewegbar ist.

Hinsichtlich der Werkzeugträgereinheiten wurden ebenfalls im Zusammenhang mit den bisherigen Ausführungsbeispielen keine weiteren Angaben gemacht.

So könnten die jeweilige Werkzeugträgereinheit neben üblichen Werkzeugen Zusatzeinrichtungen oder Schleifeinheiten tragen.

So ist es besonders günstig, wenn die jeweilige untere Werkzeugträgereinheit als Werkzeugrevolver ausgebildet ist.

In diesem Fall lassen sich sehr viele Werkzeuge bei mindestens einer der unteren Werkzeugträgereinheiten einsetzen, ohne dass in Z-Richtung ein großer Raumbedarf besteht.

Der Raumbedarf in Z-Richtung lässt sich insbesondere dann reduzieren, wenn die jeweilige untere Werkzeugträgereinheit einen Revolverkopf aufweist, welcher um eine Revolverachse drehbar ist, die parallel zur Z-Richtung ausgerichtet ist.

Ferner ist vorzugsweise vorgesehen, dass der Revolverkopf radial zur Revolverachse ausgerichtete Werkzeugaufnahmen aufweist, um ebenfalls eine in Z-Richtung platzsparende Bauweise zu realisieren.

Besonders zweckmäßig ist es, wenn die Werkzeugaufnahmen des Revolverkopfes dabei in einer senkrecht zur Revolverachse verlaufenden Ebene liegen.

Hinsichtlich der Fixierung der Spindelträger an der Oberseite des Maschinenbettkörpers wurden bislang keine näheren Angaben gemacht.

So sieht eine vorteilhafte Lösung vor, dass der Maschinenbettkörper auf der Oberseite sich in Z-Richtung erstreckende Linearführungen aufweist, an welchen mindestens einer der Spindelträger durch einen Z-Schlitten bewegbar geführt ist.

Ferner ist es für die erfindungsgemäße Lösung, insbesondere eine kostengünstige Ausführung derselben von Vorteil, wenn einer der Spindelträger stationär an der Oberseite des Maschinenbettkörpers angeordnet ist.

Es ist aber auch denkbar diesen Spindelträger in Z-Richtung bewegbar an der Oberseite zu führen.

Ferner ist vorzugsweise vorgesehen, dass ein oberes Schlittensystem an der Oberseite des Maschinenbettkörpers angeordneten Linearführungen geführt ist und eine obere Werkzeugträgereinheit trägt.

Mit einer derartigen oberen Werkzeugträgereinheit ist eine zusätzliche Möglichkeit zur Bearbeitung eines in einer der Spindeleinheiten gehaltenen Werkstücke möglich.

Besonders günstig ist es hierzu für den Aufbau der erfindungsgemäßen Werkzeugmaschine, wenn die Linearführungen für das obere Schlittensystem identisch sind mit den Linearführungen für den mindestens einen Spindelträger.

Eine weitere vorteilhafte Lösung, bei welcher insbesondere eine hohe Flexibilität für die Bearbeitung mit der oberen Werkzeugträgereinheit gegeben ist, sieht vor, dass die Linearführungen für das obere Schlittensystem sich in der Z-Richtung längs der Oberseite des Maschinenbettkörpers soweit erstrecken, dass ein zur Bearbeitung vorgesehenes Werkzeug der oberen Werkzeugträgereinheit mit dem oberen Schlittensystem innerhalb des gesamten sich zwischen den Begrenzungsebenen erstreckenden Bearbeitungsbereichs positionierbar ist, so dass ein Werkzeug beginnend an einer Begrenzungsebene und endend an der anderen Begrenzungsebene einsetzbar ist.

Ferner wurden hinsichtlich der konkreten Ausführungen der oberen Werkzeugträgereinheit keine weiteren Angaben gemacht.

So sieht eine vorteilhafte Lösung vor, dass die obere Werkzeugträgereinheit durch das obere Schlittensystem in der Z-Richtung und der X-Richtung bewegbar ist.

Eine weitere vorteilhafte Ausführung sieht vor, dass die obere Werkzeugträgereinheit durch das obere Schlittensystem in der Y-Richtung bewegbar ist.

Ferner ist vorgesehen, dass die obere Werkzeugträgereinheit durch das obere Schlittensystem um eine B-Achse drehbar ist.

Hinsichtlich der konkreten Ausbildung der oberen Werkzeugträgereinheit wurden ferner ebenfalls keine weiteren Angaben gemacht.

So sieht eine günstige Lösung vor, dass die obere Werkzeugträgereinheit eine Werkzeugspindel aufweist.

Ferner ist vorteilhafterweise vorgesehen, dass die obere Werkzeugträgereinheit einen Revolverkopf aufweist.

Hinsichtlich der besonderen Ausbildung der oberen Werkzeugträgereinheit ist vorteilhafterweise vorgesehen, dass der Revolverkopf um eine Revolverachse drehbar ist, wobei die Revolverachse insbesondere quer, vorzugsweise senkrecht zur B-Achse verläuft.

Ferner ist bei einer besonders günstigen Lösung vorgesehen, dass die Werkzeugspindel und der Revolverkopf auf einander gegenüberliegenden Seiten der oberen Werkzeugträgereinheit angeordnet sind.

Hinsichtlich des Betriebs der erfindungsgemäßen Werkzeugmaschine wurden bislang keine näheren Angaben gemacht.

Eine vorteilhafte Lösung sieht vor, dass die Werkzeugmaschine mit einer Steuerung versehen ist, welche alle Bewegungen der Werkzeugträgereinheiten und der Werkstückspindeleinheiten zur Bearbeitung von Werkstücken steuert.

Um auch die Parkpositionen der unteren Werkzeugträgereinheiten definiert anfahren zu können, ist vorzugsweise vorgesehen, dass die Steuerung aus Dimensionen der Werkstückspindeleinheiten und deren Lage in Z-Richtung die Lage der Parkpositionen in Z-Richtung ermittelt.

Damit ist die Steuerung in der Lage auch bei sich bewegenden Werkstückspindeleinheiten die Parkpositionen den Positionen der Werkstückspindeleinheiten anzupassen und somit die Parkpositionen auch entsprechend den Bewegungen der Werkstückspindeleinheiten nachzuführen.

Somit lassen sich einerseits Kollisionen zwischen den unteren Werkzeugträgereinheiten und den diese tragenden Schlittensystemen sowie auch Kollisionen mit den Werkstückspindeleinheiten, insbesondere Spindelträgern derselben vermeiden.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Frontansicht eines Ausführungsbeispiels einer erfindungsgemäßen Werkzeugmaschine;

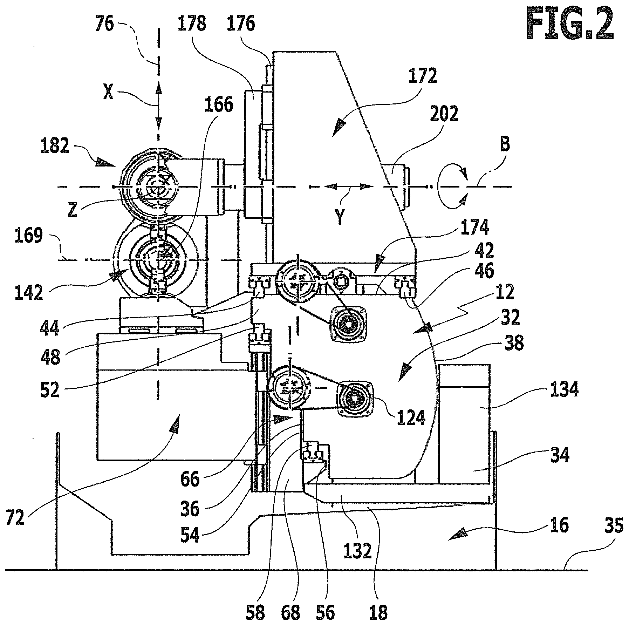

- Fig. 2: einen Schnitt längs Linie 2-2 in Fig. 1;
- Fig. 3: eine Draufsicht auf die Werkzeugmaschine gemäß Fig. 1;
- Fig. 4: eine Seitenansicht von rechts der Werkzeugmaschine gemäß Fig. 1;
- Fig. 5: eine Ansicht ähnlich Fig. 1 bei einer ersten Bearbeitungssituation;
- Fig. 6: eine Ansicht ähnlich Fig. 1 bei einer zweiten Bearbeitungssituation;
- Fig. 7: eine Ansicht ähnlich Fig. 1 bei einer dritten Bearbeitungssituation;
- Fig. 8: eine Ansicht ähnlich Fig. 1 bei einer vierten Bearbeitungssituation;
- Fig. 9: eine Ansicht ähnlich Fig. 1 bei einer fünften Bearbeitungssituation;
- Fig. 10: eine Ansicht ähnlich Fig. 1 mit Darstellung einer Parkposition einer zweiten Werkzeugträgereinheit und den Bearbeitungsmöglichkeiten innerhalb eines Bewegungsbereichs der ersten Werkzeugträgereinheit;
- Fig. 11: eine Darstellung ähnlich Fig. 1 einer Parkposition der ersten Werkzeugträgereinheit und der Bewegungsmöglichkeiten der zweiten Werkzeugträgereinheit und
- Fig. 12: eine Darstellung der ersten Werkzeugträgereinheit und der zweiten Werkzeugträgereinheit in einer Parkposition in einer Werkstückübergabestellung.

Ein Ausführungsbeispiel einer erfindungsgemäßen Werkzeugmaschine 10, in diesem Fall einer Drehmaschine, umfasst ein als Ganzes mit 12 bezeichnetes Maschinengestell, welches seinerseits ein Maschinenbett 14 aufweist, welches über einem Untergestell 16 angeordnet ist, und zwar so, dass zwischen dem Untergestell 16 und dem Maschinenbett 14 ein Freiraum 18 vorliegt.

Vorzugsweise wird dabei das Maschinenbett 14 endseitig durch Stützelemente 22 und 24 relativ zu dem Untergestell 16 abgestützt.

Das Maschinenbett 14 erstreckt sich dabei in einer Längsrichtung 26 zwischen den Stützelementen 22 und 24, so dass sich der Freiraum 18 vorzugsweise über die gesamte Länge des Maschinenbetts 14 zwischen den Stützelementen 22 und 24 erstreckt.

Das Maschinenbett 14 umfasst seinerseits einen Maschinenbettkörper 32, der mit einer Unterseite 34 dem Untergestell 16 und somit auch einer Aufstellfläche 35 für das Untergestell 16 zugewandt ist.

Von der Unterseite 34 erstrecken sich eine Frontseite 36 sowie eine Rückseite 38 des Maschinenbettkörpers 32 bis zu einer Oberseite 42 desselben, wobei die Oberseite 42 der Unterseite 34 gegenüberliegend und von dieser abgewandt ist.

Auf der Oberseite 42 sind parallel zu einer Z-Richtung und insbesondere auch parallel zur Längsrichtung 26 verlaufende und quer zur Z-Richtung und somit auch zur Längsrichtung 26 im Abstand voneinander angeordnete Linearführungen 44 und 46 vorgesehen, wobei die vordere Linearführung 44 nahe der Frontseite 36 auf einem Längssteg 48 des Maschinenbettkörpers 32 angeordnet ist, während die hintere Linearführung 46 nahe der Rückseite 38 auf der Oberseite 42 angeordnet ist.

An dem Längssteg 48, vorzugsweise unterhalb desselben ist an der Frontseite 36 eine sich in Z-Richtung erstreckende obere Linearführung 52 angeordnet.

Ferner schließt sich an den Längssteg 48 und zwar in Richtung zum Untergestell 16 oder zur Aufstellfläche 35 ein erster zurückgesetzter Bereich 54 der Frontseite 36 an und im Anschluss an den ersten zurückgesetzten Bereich 54 nahe des Übergangs zur Unterseite 34 ist ein zweiter zurückgesetzter Bereich 56 vorgesehen, in welchem eine untere zur Z-Achse parallele Linearführung 58 angeordnet ist.

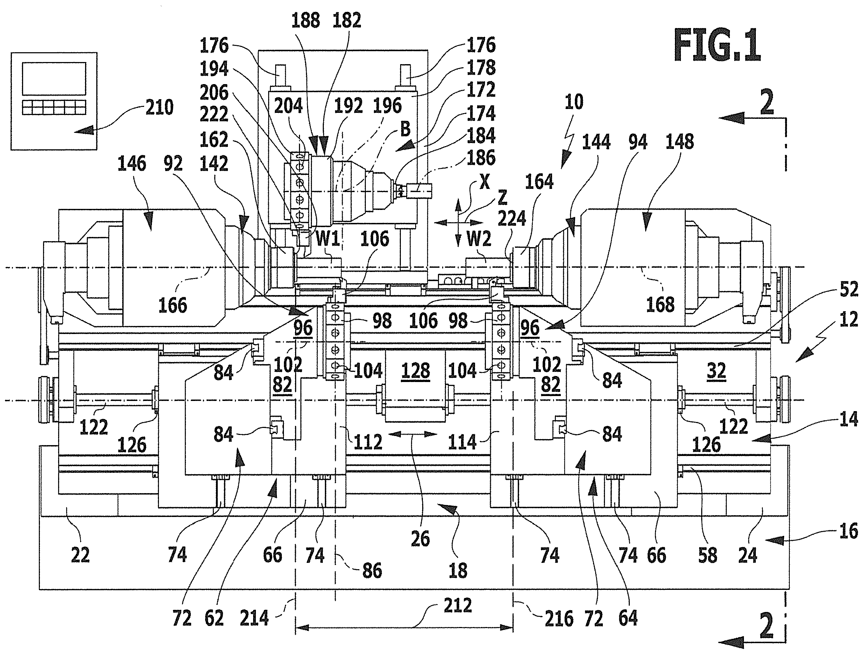

An der oberen Linearführung 52 und der unteren Linearführung 58, die sich auch parallel zur Längsrichtung 26, vorzugsweise über die gesamte Länge des Maschinenbetts 14 erstrecken, sind, wie in Fig. 1 beispielsweise dargestellt, ein erstes unteres Schlittensystem 62 und ein zweites unteres Schlittensystem 64 geführt, von denen jedes einen Z-Schlitten 66 aufweist, dessen Schlittenkörper 68 in den ersten zurückgesetzten Bereich 54 hineinragend angeordnet ist.

Auf jeden Z-Schlitten 66 ist jeweils ein X-Schlitten 72 mit Linearführungen 74 geführt, die in X-Richtung, das heißt senkrecht zur Z-Richtung verlaufen, wobei die Linearführungen 74 vorzugsweise parallel zu einer Führungsebene 76 verlaufen, die sich parallel zur Z-Richtung erstreckt und vorzugsweise gegenüber einer Vertikalen um weniger als 30°, vorzugsweise weniger als 20° und noch besser weniger als 10° geneigt sind.

Im einfachsten Fall verläuft die Führungsebene 76 parallel zu einer Vertikalen.

Zusätzlich zum X-Schlitten 72 umfassen die Schlittensysteme 62 und 64 noch einen Y-Schlitten 82, welcher an in parallel zu einer Y-Richtung verlaufenden Linearführungen 84 relativ zu dem X-Schlitten 72 geführt ist, wobei sich die Linearführungen 84 parallel zu einer Führungsebene 86 erstrecken, die senkrecht zur Z-Richtung verläuft.

Der jeweilige Y-Schlitten 82 des entsprechenden Schlittensystems 62 oder 64 trägt, wie beispielsweise in Fig. 1 dargestellt, eine erste und eine zweite untere Werkzeugträgereinheit 92 bzw. 94, welche beispielhaft als Werkzeugrevolver ausgebildet ist und jeweils ein Revolvergehäuse 96 aufweist, an welchem ein Revolverkopf 98 um eine Revolverachse 102 drehbar gelagert ist.

Dabei weist der jeweilige Revolverkopf 98 Werkzeugaufnahmen 104, in welche Werkzeuge 106 einsetzbar sind.

Die Schlittensystem 62 und 64 sowie die auf diesen angeordneten Werkzeugträgereinheiten 92 und 94 sind vorzugsweise spiegelsymmetrisch zueinander ausgebildet, wobei die Revolverköpfe 98 der Werkzeugträgereinheiten 92 bzw. 94 einander zugewandt angeordnet sind und vorzugsweise über einander zugewandten Randbereichen 112 bzw. 114 der Schlittensystem 62 bzw. 64 stehen.

Die Schlittensysteme 62 und 64 sind durch bekannte Linearantriebssysteme sowohl in Z-, als auch in X-, und in Y-Richtung verfahrbar, wobei beispielsweise entweder elektrische Linearmotoren oder mechanische Linearantriebe, wie beispielsweise Kugelrollspindeln zum Einsatz kommen können.

Bei dem dargestellten Ausführungsbeispiel ist der Z-Schlitten 66 jedes Schlittensystems 62, 64 durch mittels Antriebsmotoren 124 antreibbaren Vorschubspindeln 122 bewegbar, die mit an den Z-Schlitten 66 auf einander abgewandten Seiten sitzenden Spindelmuttern 126 zusammenwirken.

Ferner sind die Vorschubspindeln 122 an ihren einander zugewandten Enden in einer gemeinsamen Lagereinheit 128 am Maschinenbettkörper 32 drehbar gelagert und außerdem an ihren durch die Antriebsmotoren 124 angetriebenen, einander abgewandten Enden in Lagereinheiten 129 drehbar und axial unverschiebbar gelagert.

Die Versorgung der Schlittensysteme 62 und 64 erfolgt vorzugsweise über einen den Freiraum 18 durchsetzenden Kabelkanal 132, der mit einer Schleppkettenanordnung 134, die längs der Rückseite 38 verläuft, zusammenwirkt.

Der Kabelkanal 132 ist dabei fest mit dem jeweiligen Z-Schlitten 66 des jeweiligen Schlittensystems 62 und 64 verbunden und bewegt sich zusammen mit diesem in der Z-Richtung.

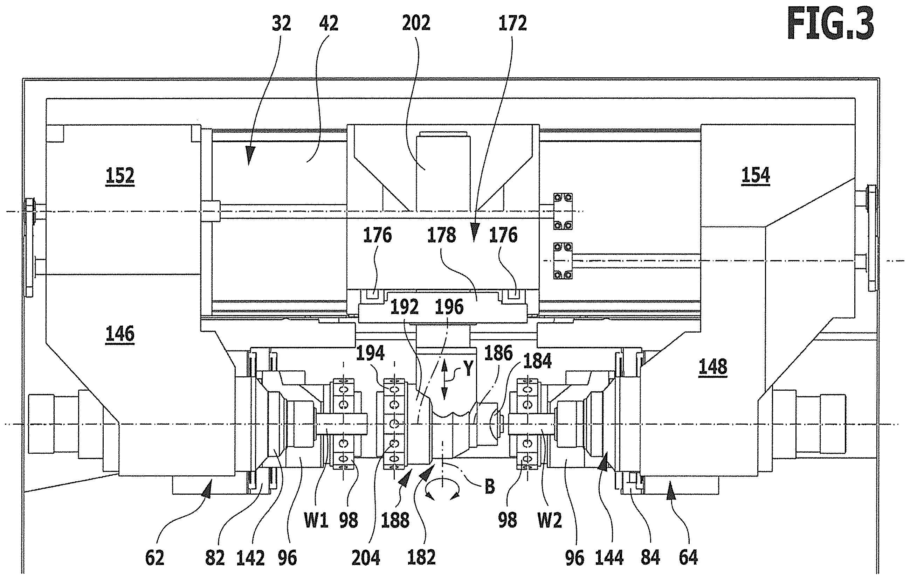

Zur Aufnahme von zu bearbeitenden Werkstücken W1 und W2 ist die Werkzeugmaschine mit Werkstückspindeleinheiten 142 und 144 versehen, die jeweils in Spindelträgern 146 bzw. 148 gehalten sind, wobei beide Spindelträger 146, 148, wie in Fig. 3 dargestellt, an der Oberseite 42 des Maschinenbettkörpers 32 gehalten sind.

Beispielsweise ist die erste Werkstückspindeleinheit 142 relativ zum Maschinenbettkörper 32 stationär angeordnet, so dass in diesem Fall der Spindelträger 146 mit einem Montageabschnitt 152 stationär an der Oberseite 42 des Maschinenbettkörpers 32 fixiert ist.

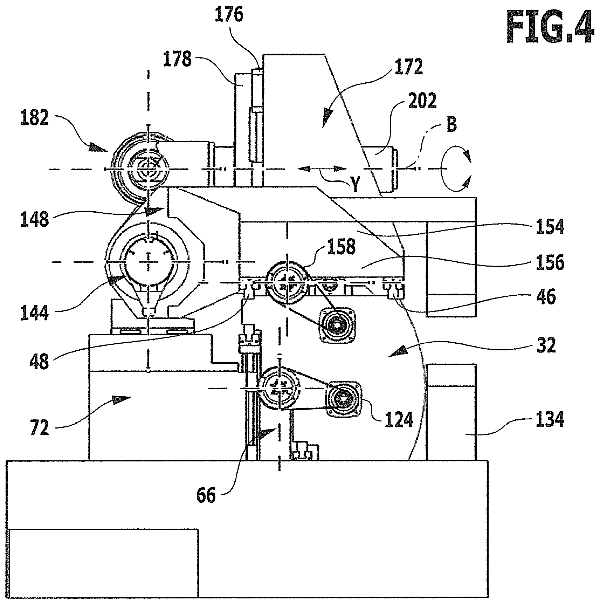

Im Gegensatz dazu ist der Spindelträger 148 in der Z-Richtung bewegbar und daher sitzt ein Montageabschnitt 154 des zweiten Spindelträgers 148 auf einem durch einen Vorschubspindelantrieb 158 bewegbaren Z-Schlitten 156, der an den Linearführungen 44 und 46, die sich in Z-Richtung erstrecken, relativ zum Maschinenbettkörper 32 fixiert ist (Fig. 4).

Somit ist die zweite Werkstückspindeleinheit 144 in der Z-Richtung relativ zur ersten Werkstückspindeleinheit 142 und somit auch relativ zum Maschinenbettkörper 32 in der Z-Richtung gesteuert verschiebbar.

Es besteht aber auch die Möglichkeit die erste Werkstückspindeleinheit 142 mit dem Montageabschnitt 152 auf einem Z-Schlitten anzuordnen und diesen ebenfalls durch die Linearführungen 44 und 46 in Z-Richtung bewegbar am Maschinenbettkörper 32 zu führen.

Jede der Werkstückspindeleinheiten 142 und 144 ist mit einer Werkstückaufnahme 162 bzw. 164 versehen, in welcher die Werkstücke W1 und W2 zur Bearbeitung aufgenommen werden.

Ferner ist jede der Werkstückaufnahmen 162, 164 durch die jeweiligen Werkstückspindeleinheiten 142 bzw. 144 um eine jeweilige Spindelachse 166 bzw. 168 drehbar gelagert und auch durch einen nicht dargestellten Spindelantrieb, beispielsweise einen integrierten Hohlwellenmotor, um die jeweilige Spindelachse 166 bzw. 168 rotierend antreibbar.

Dabei sind die Spindelachsen 166 und 168 im einfachsten Fall koaxial zueinander ausgerichtet, so dass zur Bearbeitung eines Werkstücks W1 auf der Vorderseite, beispielsweise in der ersten Werkstückspindeleinheit 142 das Werkzeug als Werkstück W2 in die zweite Werkstückspindeleinheit 144 zur Bearbeitung auf der Rückseite in einer Werkstückübergabeposition übergebbar ist.

Hierzu ist bei dem zeichnerisch dargestellten Ausführungsbeispiel die zweite Werkstückspindeleinheit 144 auf die erste Werkstückspindeleinheit 142 in Z-Richtung zu bewegbar, so dass das Werkstück W1 von der ersten Werkstückaufnahme 162 in die zweite Werkstückaufnahme 164 übergeben werden kann.

Bei der beschriebenen Lösung liegen insbesondere die unteren Werkzeugträgereinheiten 92 und 94 und die unteren Schlittensysteme 62, 64 unterhalb einer durch die Spindelachsen 166, 168 in der Werkstückübergabeposition hindurch verlaufenden horizontalen Ebene 169.

Bei dem dargestellten Ausführungsbeispiel nicht realisiert, jedoch denkbar ist eine zusätzliche Verfahrbarkeit einer der Werkstückspindeleinheiten 142, 144, beispielsweise der zweiten Werkstückspindeleinheit 144, in Richtung der X-Achse in eine weitere Bearbeitungsposition, so dass beispielsweise die zweite Spindelachse 168 in dieser Bearbeitungsposition zwar parallel zur ersten Spindelachse 166 ausgerichtet ist, jedoch nicht koaxial.

Auf den Linearführungen 44 und 46, die auf der Oberseite 42 des Maschinenbettkörpers 32 angeordnet sind, ist weiterhin noch ein als Ganzes mit 172 bezeichnetes Schlittensystem angeordnet, welches einen an den Linearführungen 44 und 46 geführten Z-Schlitten 174 und einen an dem Z-Schlitten 174 durch parallel zur X-Richtung verlaufende Linearführungen 176 geführten X-Schlitten 178 aufweist.

An dem X-Schlitten 178 ist eine Pinole 202 des Schlittensystems 172 in einer Y-Richtung verfahrbar und um eine zur Y-Richtung parallele B-Achse drehbar geführt.

Die Pinole 202 trägt eine als Ganzes mit 182 bezeichnete Werkzeugträgereinheit, die einerseits eine Frässpindel 184 umfasst, die um eine Frässpindelachse 186 drehbar ist, sowie einen der Frässpindel 184 gegenüberliegende angeordneten Werkzeugrevolver 188 aufweist, der ein Revolvergehäuse 192 umfasst, an welchem ein Revolverkopf 194 um eine Revolverachse 196 drehbar gelagert ist.

Vorzugsweise verlaufen dabei die Revolverachse 196 und die Frässpindelachse 186 koaxial zueinander und senkrecht zu der Y/B-Achse, wobei die Werkzeugträgereinheit 182 durch die Pinole 202 entlang der Y-Achse bewegbar und um die B-Achse drehbar ist.

Vorzugsweise ist der Revolverkopf 194 so ausgebildet, dass dieser radial zur Revolverachse 196 verlaufende Werkzeugaufnahmen 204 aufweist, in welche Bearbeitungswerkzeuge 206 einsetzbar sind.

Zum Betrieb der erfindungsgemäßen Werkzeugmaschine ist eine Steuerung 210 vorgesehen, welche die Bewegungen der unteren Werkzeugträgereinheiten 92 und 94 in den X-, Y- und Z-Richtungen steuert, die Bewegungen der oberen Werkezugträgereinheit 182 in den X-, Y- und Z-Richtungen und um die B-Achse steuert, die Drehungen Revolverköpfe 98 und 194 um die entsprechenden Revolverachsen 102 und 196 steuert, Antriebe der Werkstückspindeleinheiten 142 und 144 steuert und die Bewegungen des zweiten Spindelträgers 148 in Z-Richtung steuert.

Mit der erfindungsgemäßen Werkzeugmaschine 10 sind die unterschiedlichsten Bearbeitungen durchführbar.

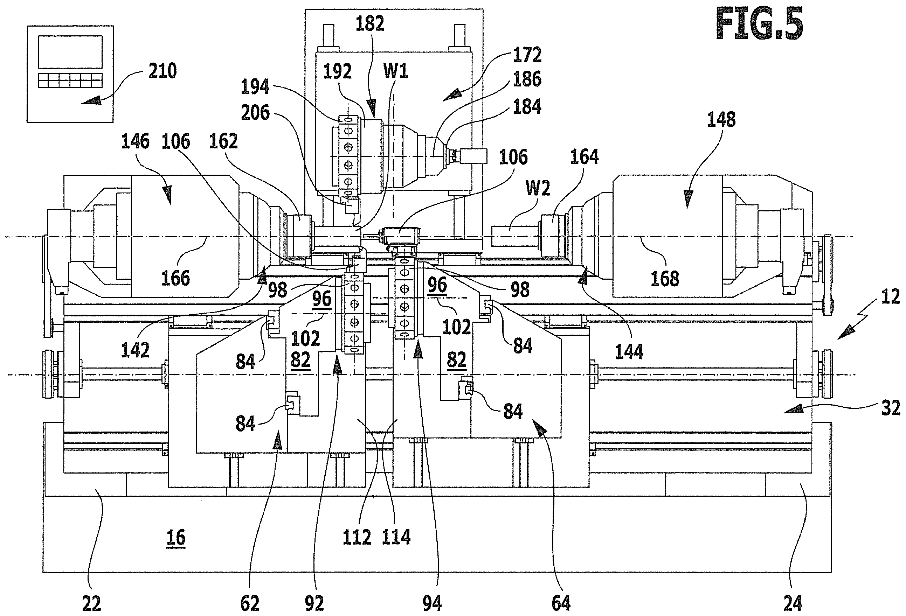

Beispielsweise sind die Werkzeuge 106 der beiden Werkzeugträgereinheiten 92 und 94 sowie das Bearbeitungswerkzeug 206 der Werkzeugträgereinheit 182 an dem ersten Werkstück W1 einsetzbar, wenn dies in der Werkstückaufnahme 162 der ersten Werkstückspindeleinheit 142 gehalten und um die erste Spindelachse 166 gegebenenfalls rotierend angetrieben ist (Fig. 5).

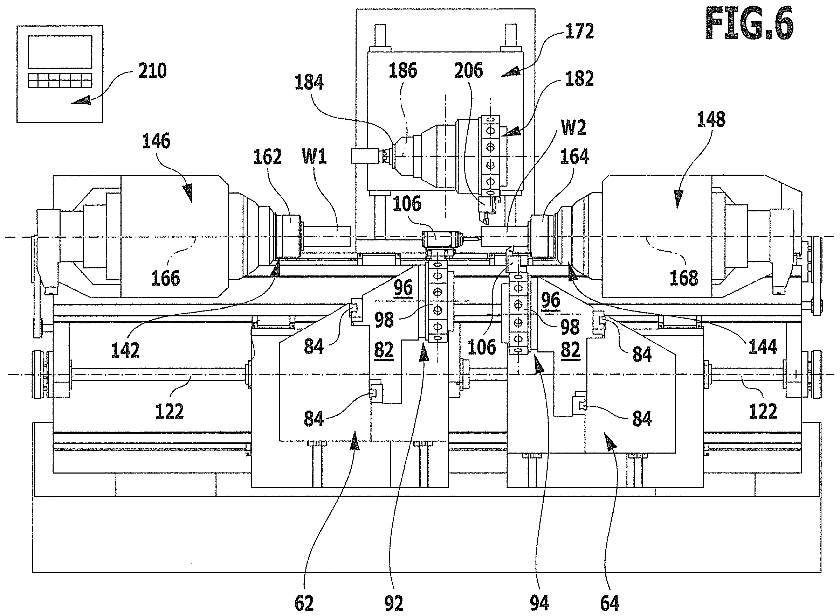

In gleicher Weise wie in Fig. 5 dargestellt, sind die Werkzeuge 106 der Werkzeugträgereinheiten 92 und 94 sowie das Werkzeug 206 der Werkzeugträgereinheit 182 zur Bearbeitung des zweiten Werkstücks W2 einsetzbar, wenn dieses in der zweiten Werkstückaufnahme 164 der zweiten Werkstückspindeleinheit 144 gehalten und gegebenenfalls um die zweite Spindelachse 168 drehend angetrieben ist, wie in Fig. 6 dargestellt.

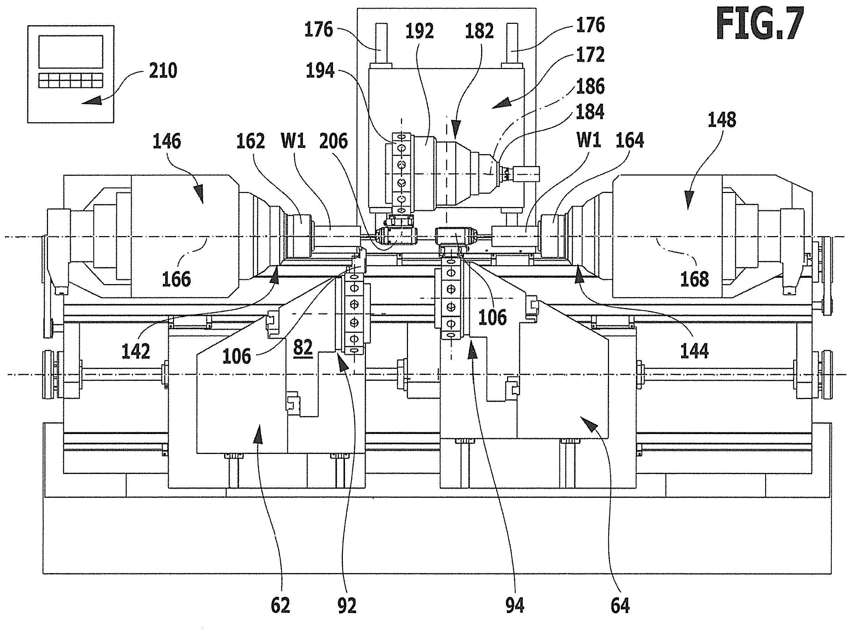

Es besteht aber auch die Möglichkeit, wie in Fig. 7 dargestellt, das Werkzeug 106 der Werkzeugträgereinheit 92 am ersten Werkstück W1 einzusetzen und das Werkzeug 106 der zweiten Werkzeugträgereinheit 94 am Werkzeug W2 einzusetzen, wobei das Werkstück W1 in der ersten Werkstückaufnahme 162 der ersten Werkstückspindeleinheit 142 und das Werkstück W2 in der Werkzeugaufnahmeeinheit 164 der zweiten Werkstückspindeleinheit 144 gehalten ist.

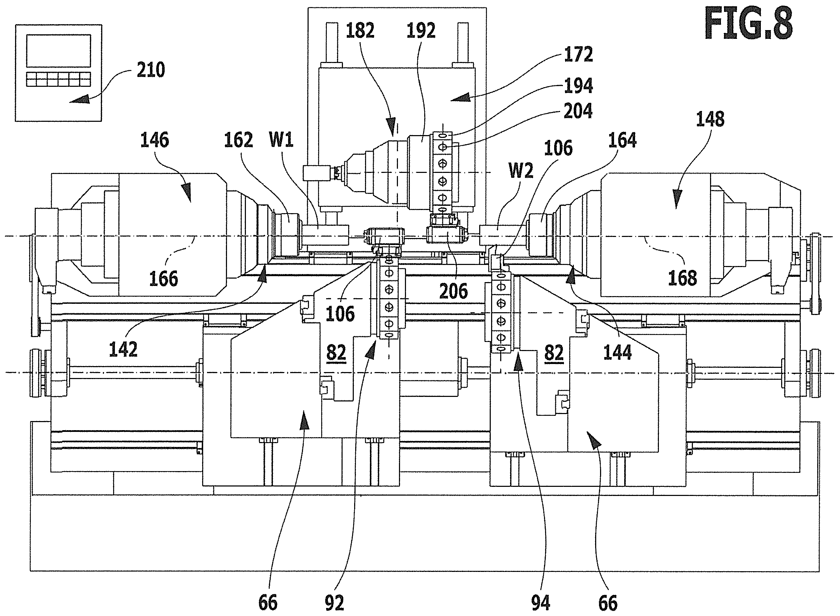

Wie in den Fig. 7 und 8 dargestellt, wobei zusätzlich noch das Werkzeug 206 der Werkzeugträgereinheit 182, wie in Fig. 7 dargestellt, am ersten Werkstück W1 einsetzbar ist oder am zweiten Werkstück W2 einsetzbar ist, wie in Fig. 8 dargestellt.

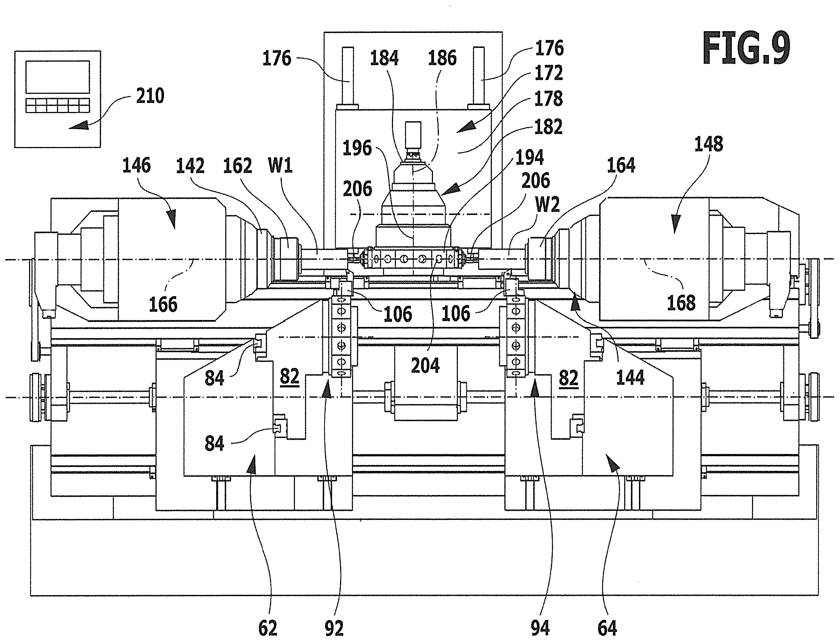

Schließlich besteht auch noch die Möglichkeit, wie in Fig. 9 dargestellt, einander gegenüberliegende Werkzeuge 206 der Werkzeugträgereinheit 182 sowohl am ersten Werkstück W1 als auch am zweiten Werkstück W2 gleichzeitig einzusetzen, wie dies in Fig. 9 dargestellt ist.

Bei allen beispielhaften, in den Fig. 5 bis 9 dargestellten Bearbeitungssituationen sind die Werkzeuge 106 der Werkzeugträgereinheiten 92 und 94 sowie 206 der Werkzeugträgereinheit 182 in einem Bearbeitungsbereich 212 eingesetzt, der zwischen zwei Begrenzungsebenen 214 und 216 liegt, wobei die erste Begrenzungsebene 214 senkrecht zur ersten Spindelachse 166 verläuft und die Werkstückaufnahme 162 an einer Stirnseite 222, welche der gegenüberliegenden Werkzeugaufnahme 164 zugewandt ist, tangiert und wobei die zweite Begrenzungsebene 216 ihrerseits senkrecht zur Spindelachse 168 verläuft und die Werkstückaufnahme 164 ebenfalls an einer der Werkstückaufnahme 162 zugewandten Stirnseite 224 tangiert.

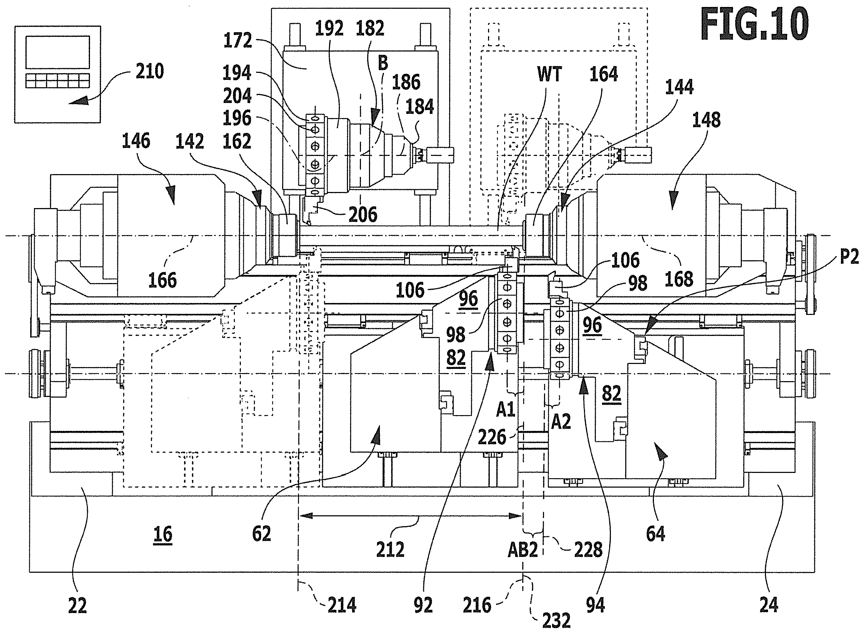

Um beispielsweise mit dem Werkzeug 106 der ersten Werkzeugträgereinheit 92 im gesamten Bearbeitungsbereich 212 ein Werkstück, beispielsweise ein Wellenteil WT, das sowohl von der Werkstückaufnahme 162 als auch von der Werkstückaufnahme 164 und somit von der ersten Werkstückspindel 142 und von der zweiten Werkstückspindel 144 gleichzeitig gehalten und angetrieben ist, bearbeiten zu können, und somit den gesamten Bearbeitungsbereich 212 mit diesem Werkzeug 106 durchfahren zu können, ist wie in Fig. 10 dargestellt, für die zweite Werkzeugträgereinheit 94 und das zweite Schlittensystem 64 eine in Fig. 10 dargestellte Parkposition P2 vorgesehen, in welcher sowohl die zweite Werkzeugträgereinheit 94 als auch das zweite Schlittensystem 64 außerhalb des Bearbeitungsbereichs 212 angeordnet sind, und zwar auf einer der zweiten Spindeleinheit 144 zugewandten Seite der zweiten Begrenzungsebene 216.

In dieser Parkposition P2 der zweiten Werkzeugträgereinheit 94 mit dem zweiten Schlittensystem 64 steht das zweite Schlittensystem 64 mit der zweiten Werkzeugträgereinheit 94 vorzugsweise in Z-Richtung gesehen in einem Z-Positionsbereich, welcher ungefähr dem Z-Positionsbereich der zweiten Spindeleinheit 144 entspricht, so dass die zweite Werkzeugträgereinheit 94 in einem Abstand AB2 von der zweiten Begrenzungsebene 216 positioniert ist, um ein vollständiges Überfahren des Bearbeitungsbereichs 212 durch das Werkzeug 106 der ersten Werkzeugträgereinheit 92 zu gewährleisten, ohne dass eine Kollision zwischen der ersten Werkzeugträgereinheit 92 und der zweiten Werkzeugträgereinheit 94 auftritt.

Vorzugsweise entspricht der Abstand AB2 der zweiten Werkzeugträgereinheit 94 von der zweiten Begrenzungsebene 216 mindestens einem Abstand A1 der Werkzeugaufnahme 104 des Werkzeugs 106 der ersten Werkzeugträgereinheit 92 von einer in Z-Richtung der zweiten Werkzeugträgereinheit 94 nächstliegenden und die erste Werkzeugträgereinheit 92 oder das erste Schlittensystems 62 tangierenden Systemgrenzebene 232, die beispielsweise den Revolverkopf 98 stirnseitig tangiert, wenn dieser in Richtung der zweiten Werkzeugträgereinheit 94 über das erste Schlittensystem 62 übersteht.

Um bei einer Bewegung der zweiten Werkstückspindeleinheit 144 in Z-Richtung die Position des in der Parkposition P2 stehenden zweiten Schlittensystems 64 mit der zweiten Werkzeugträgereinheit 94 relativ zur Werkstückspindeleinheit aufrecht zu erhalten, sieht die Steuerung 210 in diesem Fall einer Kopplung der Z-Bewegung des Z-Schlittens 156 des Spindelträger 154 und der Z-Bewegung des Z-Schlittens 66 des Schlittensystems 64 vor, so dass beide Z-Schlitten 156 und 66 synchron miteinander verfahren.

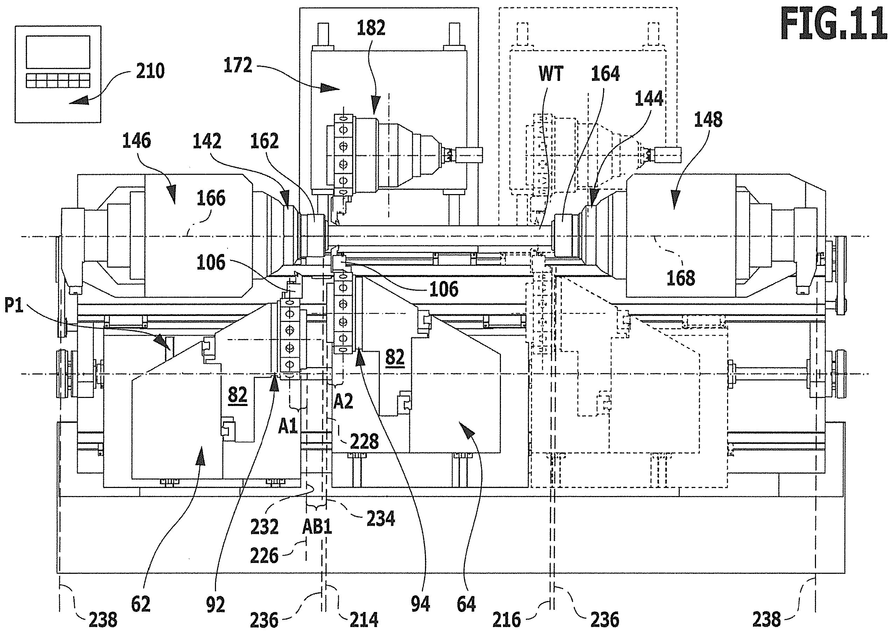

In gleicher Weise kann, wie in Fig. 11 dargestellt, auch die erste Werkzeugträgereinheit 92 mit der ersten Schlitteneinheit 62 in eine Parkposition P1 verfahren werden, in der diese auf einer dem Bearbeitungsbereich 212 abgewandten Seite der ersten Begrenzungsebene 214 und somit auf einer der ersten Spindeleinheit 142 zugewandten Seite der ersten Begrenzungsebene 214 steht.

Vorzugsweise entspricht auch in diesem Fall der Abstand AB1 der ersten Werkzeugträgereinheit 92 von der ersten Begrenzungsebene 214 mindestens einem Abstand A2 der Werkzeugaufnahme 104 der zweiten Werkzeugträgereinheit 94 von einer in Z-Richtung der gegenüberliegenden Werkzeugträgereinheit 92 nächstliegenden und die zweite Werkzeugträgereinheit 94 oder die zweite Schlitteneinheit 64 tangierenden Systemgrenzebene 234, die beispielsweise den Revolverkopf 98 stirnseitig tangiert, wenn dieser in Richtung der ersten Werkzeugträgereinheit 92 über das zweite Schlittensystem 64 übersteht.

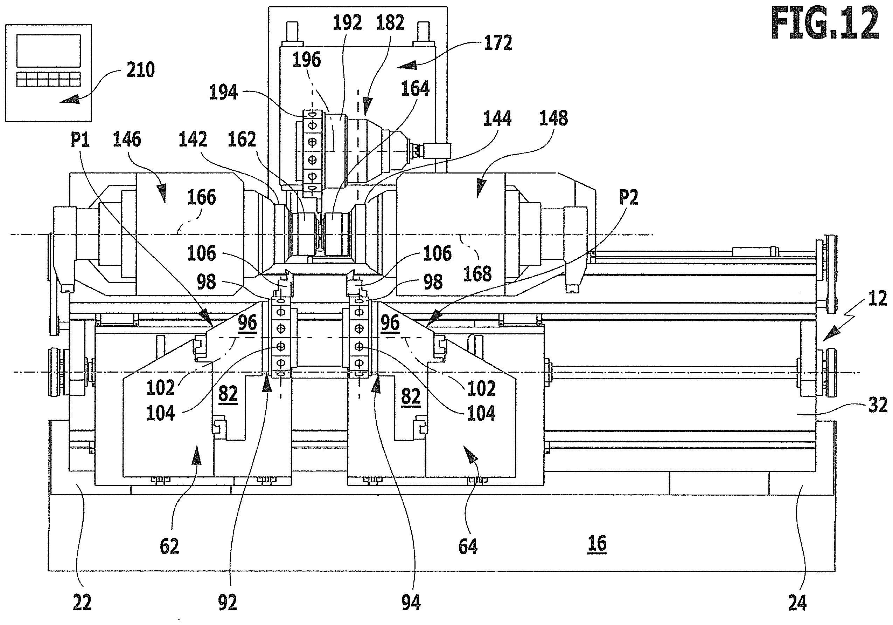

Wie in Fig. 12 dargestellt, lassen sich auch beide Werkzeugträgereinheiten 92 und 94 in ihre jeweiligen Parkpositionen P1 und P2 relativ zu den entsprechenden Werkstückspindeleinheiten 142 und 144 verfahren, beispielsweise zur Übergabe eines Werkstücks zwischen den Spindeleinheiten 142 und 144, gegebenenfalls auch noch kombiniert mit einem Bearbeitungsvorgang durch das Werkzeug 206 der Werkzeugträgereinheit 182, so dass die Werkstückaufnahmen 162 und 164 bis nahezu zur Berührung mit ihren Stirnseiten 222 und 224 aufeinander zu bewegbar sind.

Insbesondere stehen das jeweilige untere Schlittensystem 62, 64 und die jeweilige untere Werkzeugträgereinheit 92, 94 in der jeweiligen Parkposition P1, P2 zwischen zwei Spindelendebenen 236, 238 der jeweiligen Werkstückspindeleinheit 142, 144, die durch die jeweils in Z-Richtung einander gegenüberliegenden Enden der Werkstückspindeleinheiten 142, 144 festgelegt sind und die senkrecht zu der jeweiligen Spindelachse 166, 168 verlaufen.

## Patentansprüche

1. Werkzeugmaschine mit einem Maschinengestell (12), welches ein Maschinenbett (14) umfasst, das einen sich in einer Längsrichtung (26) erstreckenden Maschinenbettkörper (32) aufweist, der eine einer Aufstellfläche (35) der Werkzeugmaschine zugewandte Unterseite (34), eine der Unterseite (34) gegenüberliegend angeordnete und der Unterseite (34) abgewandte Oberseite (42) sowie eine sich zwischen der Unterseite (34) und der Oberseite (42) quer zur Unterseite (34) erstreckende Frontseite (36) aufweist,
mit zwei an dem Maschinenbett (14) angeordneten Werkstückspindeleinheiten (142, 144), die von Spindelträgern (146, 148) gehalten sind und von denen jede eine Werkstückaufnahme (162, 164) aufweist, die um eine jeweilige Spindelachse (166, 168) drehbar ist, wobei die Werkstückspindeleinheiten (142, 144) derart am Maschinenbett (14) angeordnet sind, dass die Spindelachsen (166, 168) koaxial zueinander ausgerichtet sind, so dass ein Werkstück zur Bearbeitung auf der Vorderseite und der Rückseite in einer Werkstückübergabeposition übergebbar ist, wobei die die Werkstückspindeleinheiten (142, 144) haltenden Spindelträger (146, 148) an der Oberseite (42) des Maschinenbettkörpers (32) gehalten sind und mit mindestens einer am Maschinenbett (14) angeordneten und von einem unteren Schlittensystem (62, 64) getragenen unteren Werkzeugträgereinheit (92, 94), wobei das mindestens eine untere Schlittensystem (62, 64) an der Frontseite (36) des Maschinenbettkörpers (32) angeordnet und an in Z-Richtung verlaufenden Linearführungen (52, 58), an dem Maschinenbettkörper (32) geführt ist, wobei die Spindelachsen (166, 168) in der Werkstückübergabeposition in einer X/Z-Ebene liegen, die im Abstand von der Frontseite (36) und im Abstand vor der Frontseite (36) des Maschinenbettkörpers (32) verläuft,
**dadurch gekennzeichnet, dass** einer der Spindelträger (146, 148) stationär auf der Oberseite (42) des Maschinenbettkörpers (32) fixiert ist, dass an dem Maschinenbett (14) mindestens zwei jeweils von einem unteren Schlittensystem (62, 64) getragene untere Werkzeugträgereinheiten (92, 94) vorgesehen sind, dass die mindestens zwei unteren Schlittensysteme (62, 64) mit der jeweiligen unteren Werkzeugträgereinheit (92, 94) in Z-Richtung so weit verfahrbar ist, dass diese eine Parkposition (P1, P2) außerhalb eines Bearbeitungsbereichs (212) erreichen, welcher sich zwischen senkrecht zu den jeweiligen Spindelachsen (166, 168) verlaufenden und eine Stirnseite (222, 224) der Werkstückaufnahmen (162, 164) berührenden Begrenzungsebenen (214, 216) in der Z-Richtung erstreckt, dass die mindestens zwei unteren Schlittensysteme (62, 64) derart am Maschinenbettkörper (32) in Z-Richtung bewegbar geführt sind, dass bei jeder möglichen Ausdehnung des Bearbeitungsbereichs (212) in Z-Richtung die Werkzeuge (106) der jeweiligen unteren Werkzeugträgereinheit (92, 94) innerhalb des gesamten Bearbeitungsbereichs (212) einsetzbar sind.

2. Werkzeugmaschine nach Anspruch 1, **dadurch gekennzeichnet, dass** die Spindelachsen (166, 168) in der Werkstückübergabeposition in einer X/Z-Ebene liegen, die parallel zur Z-Richtung und gegenüber einer Vertikalen um einen Winkel von 30° oder weniger geneigt verläuft.

3. Werkzeugmaschine nach einem der voranstehenden Ansprüche, **dadurch gekennzeichnet, dass** das mindestens eine untere Schlittensystem (62, 64) und insbesondere auch die untere Werkzeugträgereinheit (92, 94) unterhalb einer durch die Spindelachsen (166, 168) in der Werkstückübergabeposition hindurchverlaufenden horizontalen Ebene (169) liegen.

4. Werkzeugmaschine nach einem der voranstehenden Ansprüche, **dadurch gekennzeichnet, dass** das mindestens eine untere Schlittensystem (62, 64) und die jeweilige von diesem getragene untere Werkzeugträgereinheit (92, 94) in der Parkposition (P1, P2) mindestens in einem Abstand (AB1, AB2) von der jeweiligen Begrenzungsebene (214, 216) und außerhalb des Bearbeitungsbereichs (212) positionierbar sind.

5. Werkzeugmaschine nach einem der voranstehenden Ansprüche, **dadurch gekennzeichnet, dass** das in der Parkposition (P1, P2) stehende Schlittensystem (62, 64) und die jeweilige von diesen getragene Werkzeugträgereinheit (92, 94) in der Parkposition (P1, P2) in einem Abstand (AB1, AB2) von der nächstliegenden Begrenzungsebene (214, 216) des Bearbeitungsraums (212) stehen, der mindestens einem Abstand (A1, A2) einer Werkzeugaufnahme (104) von einer parallel zur Begrenzungsebene (214, 216) verlaufenden Systemgrenzebene (232, 234) entspricht, deren Lage durch eine maximale Ausdehnung des jeweils anderen der Schlittensysteme (62, 64) mit der jeweiligen von diesen getragenen Werkzeugträgereinheit (92, 94), gegebenenfalls mit den Werkzeugen, in Richtung der Begrenzungsebene (214, 216) definiert ist.

6. Werkzeugmaschine nach einem der voranstehenden Ansprüche, **dadurch gekennzeichnet, dass** die jeweilige untere Werkzeugträgereinheit (92, 94) in einer Parkposition (P1, P2) positionierbar ist, die zwischen zwei durch die jeweilige Werkstückspindeleinheit (142 ,144) definierten Spindelendebenen (236, 238) liegt, welche quer zu der jeweiligen Spindelachse (166, 168) verlaufen und durch einander gegenüberliegende Enden der Werkstückspindeleinheiten (142, 144) in Z-Richtung festgelegt sind.

7. Werkzeugmaschine nach einem der voranstehenden Ansprüche, **dadurch gekennzeichnet, dass** Werkzeuge (106) der jeweiligen unteren Werkzeugträgereinheiten (92, 94) über einander zugewandt angeordneten Randbereichen (112, 144) der jeweiligen unteren Schlittensysteme (62, 64) angeordnet sind.

8. Werkzeugmaschine nach einem der voranstehenden Ansprüche, **dadurch gekennzeichnet, dass** die jeweilige untere Werkzeugträgereinheit (92, 94) durch das jeweilige untere Schlittensystem (62, 64) relativ zum Maschinenbettkörper (32) in Z-Richtung und in X-Richtung bewegbar ist.

9. Werkzeugmaschine nach Anspruch 8, **dadurch gekennzeichnet, dass** die jeweilige untere Werkzeugträgereinheit (92, 94) durch das jeweilige Schlittensystem (62, 64) zusätzlich in Y-Richtung bewegbar ist.

10. Werkzeugmaschine nach einem der voranstehenden Ansprüche, **dadurch gekennzeichnet, dass** die jeweilige untere Werkzeugträgereinheit (92, 94) durch das jeweilige untere Schlittensystem (62, 64) derart in X-Richtung und/oder Y-Richtung positionierbar ist, dass diese in Z-Richtung an der Werkstückaufnahme (162, 164) der jeweiligen Werkstückspindeleinheit (142, 144) vorbeibewegbar ist.

11. Werkzeugmaschine nach einem der voranstehenden Ansprüche, **dadurch gekennzeichnet, dass** die jeweilige untere Werkzeugträgereinheit (92, 94) durch das jeweilige untere Schlittensystem (62, 64) derart in X-Richtung und/oder in Y-Richtung positionierbar ist, dass diese in Z-Richtung an der jeweiligen Werkstückspindeleinheit (146, 148) vorbeibewegbar ist.

## Claims

1. Machine tool with a machine frame (12) comprising a machine bed (14) with a machine bed member (32) extending in a longitudinal direction (26) and having an underside (34) facing an installation surface (35) of the machine tool, an upper side (42) arranged so as to be located opposite the underside (34) and facing away from the underside (34) as well as a front side (36) extending transversely to the underside (34) between the underside (34) and the upper side (42),
comprising two workpiece spindle units (142, 144) arranged on the machine bed (14), said spindle units being held by spindle carriers (146, 148) and each of them having a workpiece receptacle (162, 164) rotatable about a respective spindle axis (166, 168), wherein the workpiece spindle units (142, 144) are arranged on the machine bed (14) in such a manner that the spindle axes (166, 168) are aligned coaxially to one another such that a workpiece is transferrable in a workpiece transfer position for machining on the front side and the rear side, wherein the spindle carriers (146, 148) holding the workpiece spindle units (142, 144) are held on the upper side (42) of the machine bed member (32) and comprising at least one lower tool carrier unit (92, 94) arranged on the machine bed (14) and supported by a lower slide system (62, 64), wherein the at least one lower slide system (62, 64) is arranged on the front side (36) of the machine bed member (32) and is guided on the machine bed member (32) in linear guides (52, 58) extending in a Z direction, wherein in the workpiece transfer position the spindle axes (166, 168) are located in an X/Z plane extending at a distance from the front side (36) and at a distance in front of the front side (36) of the machine bed member (32),
**characterized in that** one of the spindle carriers (146, 148) is fixed stationarily on the upper side (42) of the machine bed member (32), that at least two lower tool carrier units (92, 94) each supported by a lower slide system (62, 64) are provided on the machine bed (14), that the at least two lower slide systems (62, 64) are movable with the respective lower tool carrier unit (92, 94) in the Z direction to such an extent that they reach a parking position (P1, P2) outside a machining area (212), said area extending in the Z direction between limiting planes (214, 216) extending at right angles to the respective spindle axes (166, 168) and bordering on an end side (222, 224) of the workpiece receptacles (162, 164), that the at least two lower slide systems (62, 64) are guided on the machine bed member (32) for movement in the Z direction in such a manner that in the case of every possible extension of the machining area (212) in the Z direction the tools (106) of the respective lower tool carrier unit (92, 94) are deployable within the entire machining area (212).

2. Machine tool as defined in claim 1, **characterized in that** in the workpiece transfer position the spindle axes (166, 168) are located in an X/Z plane running parallel to the Z direction and inclined through an angle of 30° or less in relation to the vertical.

3. Machine tool as defined in any one of the preceding claims, **characterized in that** at least one lower slide system (62, 64) and, in particular, the lower tool carrier unit (92, 94), as well, are located beneath a horizontal plane (169) extending through the spindle axes (166, 168) in the workpiece transfer position.

4. Machine tool as defined in any one of the preceding claims, **characterized in that** in the parking position (P1, P2) the at least one lower slide system (62, 64) and the respective lower tool carrier unit (92, 94) supported by it are positionable at least at a distance (AB1, AB2) from the respective limiting plane (214, 216) and outside the machining area (212).

5. Machine tool as defined in any one of the preceding claims, **characterized in that** the slide system (62, 64) located in the parking position (P1, P2) and the respective tool carrier unit (92, 94) supported by it are located in the parking position (P1, P2) at a distance (AB1, AB2) from the closest limiting plane (214, 216) of the machining space (212) corresponding at least to a distance (A1, A2) of a tool receptacle (104) from a system boundary plane (232, 234) extending parallel to the limiting plane (214, 216), the position of said system boundary plane being defined by a maximum extension of the respectively other one of the slide systems (62, 64) with the respective tool carrier unit (92, 94) supported by it, where applicable with the tools, in the direction of the limiting plane (214, 216).

6. Machine tool as defined in any one of the preceding claims, **characterized in that** the respective lower tool carrier unit (92, 94) is positionable in a parking position (P1, P2) located between two spindle end planes (236, 238) defined by the respective workpiece spindle unit (142, 144), said planes extending transversely to the respective spindle axis (166, 168) and being determined in the Z direction by ends of the workpiece spindle units (142, 144) located opposite one another.

7. Machine tool as defined in any one of the preceding claims, **characterized in that** tools (106) of the respective lower tool carrier units (92, 94) are arranged above edge areas (112, 114) of the respective lower slide systems (62, 64) arranged so as to face one another.

8. Machine tool as defined in any one of the preceding claims, **characterized in that** the respective lower tool carrier unit (92, 94) is movable in the Z direction and in the X direction relative to the machine bed member (32) by the respective lower slide system (62, 64).

9. Machine tool as defined in claim 8, **characterized in that** the respective lower tool carrier unit (92, 94) is movable, in addition, in the Y direction by the respective slide system (62, 64).

10. Machine tool as defined in any one of the preceding claims, **characterized in that** the respective lower tool carrier unit (92, 94) is positionable in the X direction and/or the Y direction by the respective lower slide system (62, 64) in such a manner that it is movable in the Z direction past the workpiece receptacle (162, 164) of the respective workpiece spindle unit (142, 144).

11. Machine tool as defined in any one of the preceding claims, **characterized in that** the respective lower tool carrier unit (92, 94) is positionable in the X direction and/or in the Y direction by the respective lower slide system (62, 64) in such a manner that it is movable in the Z direction past the respective workpiece spindle unit (146, 148).

## Revendications

1. Machine-outil avec un bâti de machine (12), qui comprend un banc de machine (14), qui présente un corps de banc de machine (32) s'étendant dans une direction longitudinale (26), qui présente un côté inférieur (34) tourné vers une surface de pose (35) de la machine-outil, un côté supérieur (42) disposé de manière à faire face au côté inférieur (34) et opposé au côté inférieur (34) ainsi qu'un côté avant (36) s'étendant entre le côté inférieur (34) et le côté supérieur (42) de manière transversale par rapport au côté inférieur (34),
avec deux unités de broche porte-pièce (142, 144) disposées au niveau du banc de machine (14), qui sont maintenues par des supports de broche (146, 148) et dont chacune présente un logement de pièce (162, 164), qui peut tourner autour d'un axe de broche (166, 168) respectif, dans laquelle les unités de broche porte-pièce (142, 144) sont disposées de telle manière au niveau du banc de machine (14) que les axes de broche (166, 168) sont orientés de manière coaxiale les uns par rapport aux autres de sorte qu'une pièce peut être transférée, aux fins de l'usinage sur le côté avant et le côté arrière, dans une position de transfert de pièce, dans laquelle les supports de broche (146, 148) maintenant les unités de broche porte-pièce (142, 144) sont maintenus au niveau du côté supérieur (42) du corps de banc de machine (32), et avec au moins une unité de support d'outils (92 ; 94) inférieure disposée au niveau du banc de machine (14) et supportée par un système de chariot (62, 64) inférieur, dans laquelle l'au moins un système de chariot (62, 64) inférieur est disposé au niveau du côté avant (36) du corps de banc de machine (32) et est guidé au niveau du corps de banc de machine (32) au niveau de systèmes de guidage linéaires (52, 58) s'étendant dans la direction Z, dans laquelle les axes de broche (166, 168) se situent, dans la position de transfert de pièce, dans un plan X/Z, qui s'étend à distance du côté avant (36) et à distance du côté avant (36) du corps de banc de machine (32),
**caractérisée en ce qu'**un des supports de broche (146, 148) est bloqué de manière stationnaire sur le côté supérieur (42) du corps de banc de machine (32), qu'au moins deux unités de support d'outils (92, 94) inférieures supportées respectivement par un système de chariot (62, 64) inférieur sont prévues au niveau du banc de machine (14), que les au moins deux systèmes de chariot (62, 64) inférieurs peuvent être déplacés avec l'unité de support d'outils (92, 94) inférieure dans la direction Z si loin que ceux-ci atteignent une position de stationnement (P1, P2) à l'extérieur d'une zone d'usinage (212), laquelle s'étend entre des plans de délimitation (214, 216) s'étendant de manière perpendiculaire par rapport aux axes de broche (166, 168) respectifs s'appuyant sur un côté frontal (222, 224) des logements de pièce (162, 164) dans la direction Z, que les au moins deux systèmes de chariot (62, 64) inférieurs sont guidés de manière à pouvoir être déplacés dans la direction Z de telle manière au niveau du corps de banc de machine (32) qu'en cas de chaque extension éventuelle de la zone d'usinage (212) dans la direction Z, les outils (106) de l'unité de support d'outils (92, 94) inférieure respective peuvent être insérés à l'intérieur de l'ensemble de la zone d'usinage (212).

2. Machine-outil selon la revendication 1, **caractérisée en ce que** les axes de broche (166, 168) se situent, dans la position de transfert de pièce, dans un plan X/Z, qui s'étend de manière parallèle par rapport à la direction Z et de manière inclinée selon un angle de 30° ou moins par rapport à une verticale.

3. Machine-outil selon l'une quelconque des revendications précédentes, **caractérisée en ce que** l'au moins un système de chariot (62, 64) inférieur et en particulier également l'unité de support d'outils (92, 94) inférieure se situent sous un plan horizontal (169) s'étendant à travers les axes de broche (166, 168) de part en part dans la position de transfert de pièce.

4. Machine-outil selon l'une quelconque des revendications précédentes, **caractérisée en ce que** l'au moins un système de chariot (62, 64) inférieur et l'unité de support d'outils (92, 94) inférieure respective supportée par celui-ci peuvent être positionnés dans la position de stationnement (P1, P2) au moins à une distance (AB1, AB2) du plan de délimitation (214, 216) respectif et à l'extérieur de la zone d'usinage (212).

5. Machine-outil selon l'une quelconque des revendications précédentes, **caractérisée en ce que** le système de chariot (62, 64) se trouvant dans la position de stationnement (P1, P2) et l'unité de support d'outils (92, 94) respective supportée par celui-ci se trouvent dans la position de stationnement (P1, P2) à une distance (AB1, AB2) du plan de délimitation (214, 216) le plus proche de l'espace d'usinage (212), qui correspond au moins à une distance (A1, A2) d'un logement d'outil (104) d'un plan limite de système (232, 234) s'étendant de manière parallèle par rapport au plan de délimitation (214, 216), dont la position est définie en direction du plan de délimitation (214, 216) par une extension maximale de l'autre respectivement des systèmes de chariot (62, 64) avec l'unité de support d'outils (92, 94) respective supportée par ces derniers, éventuellement avec les outils.

6. Machine-outil selon l'une quelconque des revendications précédentes, **caractérisée en ce que** l'unité de support d'outils (92, 94) inférieure respective peut être positionnée dans une position de stationnement (P1, P2), qui se situe entre deux plans d'extrémité de broche (236, 238) définis par l'unité de broche porte-pièce (142, 144) respective, lesquels s'étendent de manière transversale par rapport à l'axe de broche (166, 168) respectif et sont fixés dans la direction Z par des extrémités se faisant face les unes les autres des unités de broche porte-pièce (142, 144).

7. Machine-outil selon l'une quelconque des revendications précédentes, **caractérisée en ce que** des outils (106) des unités de support d'outils (92, 94) inférieures respectives sont disposés au-dessus des zones de bord (112, 144) disposées de manière tournée les unes vers les autres des systèmes de chariot (62, 64) inférieurs respectifs.

8. Machine-outil selon l'une quelconque des revendications précédentes, **caractérisée en ce que** l'unité de support d'outils (92, 94) inférieure respective peut être déplacée dans la direction Z et dans la direction X par le système de chariot (62, 64) inférieur respectif par rapport au corps de banc de machine (32).

9. Machine-outil selon la revendication 8, **caractérisée en ce que** l'unité de support d'outils (92, 94) inférieure respective peut être déplacée en supplément dans la direction Y par le système de chariot (62, 64) respectif.

10. Machine-outil selon l'une quelconque des revendications précédentes, **caractérisée en ce que** l'unité de support d'outils (92, 94) inférieure respective peut être positionnée par le système de chariot (62, 64) inférieur respectif de telle manière dans la direction X et/ou dans la direction Y que celle-ci peut être déplacée dans la direction Z de manière à longer le logement de pièce (162, 164) de l'unité de broche porte-pièce (142, 144).

11. Machine-outil selon l'une quelconque des revendications précédentes, **caractérisée en ce que** l'unité de support d'outils (92, 94) inférieure respective peut être positionnée par le système de chariot (62, 64) inférieur respectif de telle manière dans la direction X et/ou dans la direction Y que celle-ci peut être déplacée dans la direction Z de manière à longer l'unité de broche porte-pièce (146, 148) respective.
